# EUROPÄISCHE PATENTSCHRIFT

(11) **EP 2 590 778 B1**
(45) Veröffentlichungstag und Bekanntmachung des Hinweises auf die Patenterteilung: **01.10.2014**
(21) Anmeldenummer: 11731260.3
(22) Anmeldetag: 29.06.2011
(51) Int. Cl.: B23Q 1/03, B25B 11/00

(54) **UNIVERSALSPANNSYSTEM ZUR HALTERUNG EINES WERKSTÜCKS**
UNIVERSAL CLAMPING SYSTEM FOR CLAMPING A WORKPIECE
DISPOSITIF DE SUPPORT UNIVERSEL POUR LE SUPPORT D'UNE PIECE

(30) Priorität: 06.07.2010 DE 102010026163
(43) Veröffentlichungstag der Anmeldung: 15.05.2013
(73) Patentinhaber: Ludwig Ehrhardt GmbH, 35321 Laubach (DE)
(72) Erfinder: KLEPSCH, Werner, 67435 Neustadt (DE); THOELEN, Johannes, 57271 Hilchenbach (DE)
(74) Vertreter: Beier, Ralph
(86) Internationale Anmeldenummer: PCT/EP2011/003204
(87) Internationale Veröffentlichungsnummer: WO 2012/003933

(56) Entgegenhaltungen:
- EP-A1- 0 507 033
- EP-A1- 1 577 050
- EP-A1- 1 704 957
- DE-U1-202007 002 845
- US-A- 5 427 363
- US-A1- 2008 127 474
- US-A1- 2009 057 971
- US-B1- 6 250 619

## Beschreibung

Die Erfindung betrifft ein Universalspannsystem zur Halterung eines Werkstücks, insbesondere eines Freiformteils.

Zur Fixierung von dünnwandigen Freiformflächen werden sogenannte Universalspannvorrichtungen eingesetzt, die entsprechend der einschlägigen Fachterminologie auch als "Universal holding fixture" (UHF) bezeichnet werden und beispielsweise von der deutschen Firma Kostyrka GmbH erhältlich sind. Diese bekannten Universalspannvorrichtungen weisen als Grundelement Kolben-Zylinder-Einheiten auf, die über eine Kolbenstange jeweils eine Werkstückauflage axial verschiebbar positionieren können. Bei den bekannten Universalspannvorrichtungen ist eine Vielzahl dieser Grundelemente matrixförmig nebeneinander angeordnet, wobei die Kolbenstangen unterschiedlich weit ausgefahren werden können, um die jeweilige Werkstückauflage entsprechend der Außenkontur der zu fixierenden Freiformfläche zu positionieren. Vorteilhaft an diesen herkömmlichen Universalspannvorrichtungen ist die Tatsache, dass Bauteile mit unterschiedlichen Außenkonturen fixiert werden können, ohne dass eine Anpassung der Universalspannvorrichtung erforderlich ist.

Nachteilig an den vorstehend beschriebenen herkömmlichen Universalspannvorrichtungen ist jedoch die Tatsache, dass die Ventil- und Steuerungstechnik für die einzelnen Grundelemente von den Grundelementen baulich getrennt ist. Es ist deshalb relativ aufwendig, die einzelnen Grundelemente auszutauschen oder umzupositionieren, da die einzelnen Grundelemente dann wieder umständlich an die zugehörige Ventil- und Steuerungstechnik angeschlossen werden müssen.

Aus DE 100 23 915 A1 ist eine Universalspannvorrichtung bekannt, die jedoch ebenfalls durch eine externe Steuereinrichtung angesteuert wird.

Ferner ist zum Stand der Technik hinzuweisen auf DE 197 45 145 A1, DE 10 2006 005 762 A1, DE 299 03 825 U1, US 6 250 619 B1, EP 0 507 033 A1, US 5 427 363 A, US 2009/057971 A1, EP 1 704 957 A1, DE 20 2007 002845 U1 und EP E 577 050 A1.

Schließlich offenbart US 2008/127474 A1 eine Universalspannsystem gemäß der Oberbegriff von Anspruch 1. Bei diesem Universalspannsystem ist das Andocken des Greifers an die einzelnen Haltevorrichtungen jedoch unbefriedigend.

Der Erfindung liegt deshalb die Aufgabe zugrunde, die vorstehend beschriebenen herkömmlichen Universalspannsysteme entsprechend zu verbessern.

Diese Aufgabe wird durch ein Universalspannsystem gemäß dem Hauptanspruch gelöst.

Die Erfindung umfasst den allgemeinen technischen Gedanken, die Ventil- und Steuerungstechnik in die Haltevorrichtung zu integrieren, so dass die Verbindungen zwischen der Ventil- und Steuerungstechnik und der Haltevorrichtung bei einer Umpositionierung und beim Austausch der Haltevorrichtung nicht getrennt werden müssen. Dies bietet den Vorteil, dass die Umpositionierung und der Austausch der einzelnen Haltevorrichtungen wesentlich einfacher ist.

Die Haltevorrichtung des erfindungsgemäßen Universalspannsystems weist zunächst eine verschiebbare Kolbenstange auf, die eine Werkstückauflage führt, so dass die Werkstückauflage axial individuell positioniert werden kann, um die Position der Werkstückauflage individuell an die Außenkontur des jeweiligen Werkstücks anzupassen.

Darüber hinaus weist die Haltevorrichtung des erfindungsgemäßen Universalspannsystems auch einen Kolbenstangenantrieb auf, um die Kolbenstange zusammen mit der Werkstückauflage aktiv zu verschieben. Davon zu unterscheiden sind passive Universalspannvorrichtungen, bei denen kein aktiver Antrieb der Kolbenstange erfolgt, da beispielsweise die Außenkontur des Werkstücks die Kolbenstange entsprechend verschiebt. Der Kolbenstangenantrieb arbeitet vorzugsweise pneumatisch, elektrisch oder hydraulisch, jedoch sind im Rahmen der Erfindung auch andere Antriebsarten möglich.

Im Gegensatz zu den Grundelementen (Kolben-Zylinder-Einheit) der eingangs beschriebenen herkömmlichen Universalspannvorrichtungen weist die Haltevorrichtung des erfindungsgemäßen Universalspannsystems eine baulich integrierte Steuereinheit zum Ansteuern des Kolbenstangenantriebs auf. Dies ist - wie bereits vorstehend erwähnt - vorteilhaft, weil es dann beim Umpositionieren der Haltevorrichtung oder beim Austausch der Haltevorrichtung nicht erforderlich ist, die Haltevorrichtung mit der Steuereinheit zu verbinden, wie es beim Stand der Technik notwendig ist.

Die vorstehend kurz beschriebene Haltevorrichtung des erfindungsgemäßen Universalspannsystems eignet sich im Rahmen von Universalspannvorrichtungen als Grundelement, wobei zahlreiche derartige Haltevorrichtungen nebeneinander angeordnet werden können, wie es auch bei den eingangs beschriebenen herkömmlichen Universalspannvorrichtungen der Fall ist.

In dem bevorzugten Ausführungsbeispiel der Erfindung weist die Werkstückauflage einen an sich bekannten Vakuumsauger auf, um die Werkstückoberfläche anzusaugen und das Werkstück dadurch zu fixieren. Die Erfindung ist jedoch hinsichtlich der konstruktiven Gestaltung der Werkstückauflage nicht auf derartige Vakuumsauger beschränkt, sondern grundsätzlich auch mit anderen Typen und Bauweisen von Werkstückauflagen realisierbar.

Darüber hinaus verfügt die erfindungsgemäße Haltevorrichtung vorzugsweise über eine Klemmvorrichtung zum Festklemmen der Kolbenstange. Derartige Klemmvorrichtungen sind an sich ebenfalls bekannt und werden beispielsweise von der deutschen Firma Kostyrka GmbH vertrieben, so dass auf eine detaillierte Beschreibung von Aufbau und Funktionsweise derartiger Klemmvorrichtungen verzichtet werden kann.

Die Ansteuerung der Klemmvorrichtung erfolgt vorzugsweise hydraulisch über einen Druckübersetzer, der primärseitig mit Druckluft beaufschlagt wird und sekundärseitig einen entsprechenden Hydraulikdruck erzeugt, der bewirkt, dass die Klemmvorrichtung die Kolbenstange festklemmt. Der Druckübersetzer arbeitet also vorzugsweise luft-hydraulisch, wobei der Druckübersetzer an der Sekundärseite hydraulisch und an der Primärseite pneumatisch arbeitet.

In dem bevorzugten Ausführungsbeispiel der Erfindung weist der Druckübersetzer eine Feder auf, die einen Klemmdruck erzeugt, wenn an der Primärseite des Druckübersetzers kein Druck anliegt, wobei der Klemmdruck bewirkt, dass die Klemmvorrichtung die Kolbenstange festklemmt. Zum Lösen der Klemmvorrichtung muss dagegen an der Primärseite des Druckübersetzers ein entsprechender Lösedruck angelegt werden, woraufhin dann die Klemmvorrichtung die Kolbenstange freigibt.

Hierbei ist zu erwähnen, dass der Druckübersetzer vorzugsweise baulich in die Haltevorrichtung integriert ist, wobei sich der Druckübersetzer vorzugsweise an dem der Werkstückauflage gegenüberliegenden Ende der Haltevorrichtung befindet, d.h. bei einer hängenden Montage am unteren Ende.

Es wurde bereits vorstehend erwähnt, dass sich die erfindungsgemäße Haltevorrichtung gegenüber dem Stand der Technik durch eine baulich integrierte Steuereinheit auszeichnet. Diese Steuereinheit umfasst vorzugsweise Pneumatikventile zur Ansteuerung des Kolbenstangenantriebs, des Vakuumsaugers und/oder des Druckübersetzers sowie entsprechende Ventilantriebe.

Darüber hinaus umfasst die baulich integrierte Steuereinheit vorzugsweise auch einen Controller, der die Pneumatikventile ansteuert, wobei der Controller über einen externen Busanschluss angesteuert werden kann.

Die Ansteuerung der verschiedenen Universalspannvorrichtungen über einen gemeinsamen Steuerbus bietet den Vorteil, dass der Verkabelungsaufwand deutlich reduziert wird, da nur ein einziger Steuerbus erforderlich ist, der beispielsweise als serieller Bus oder als paralleler Bus realisiert werden kann. Die einzelnen Universalspannvorrichtungen können dabei über den Steuerbus individuell adressiert (=ausgewählt) und dann mit den gewünschten Steuersignalen angesteuert werden, um die gewünschte Stellung der jeweiligen Universalspannvorrichtung einzustellen.

Weiterhin ist zu erwähnen, dass jede der erfindungsgemäßen aktiven universellen Haltevorrichtungen vorzugsweise eine eigene Identifikation (Kennung) aufweist, die es ermöglicht, die einzelnen Haltevorrichtungen individuell zu adressieren. Diese Identifikation (Kennung) kann beispielsweise aus einer gespeicherten Identifikationsnummer bestehen oder durch Hardwareschalter eingestellt werden. Die individuelle Identifikation (Kennung) der einzelnen Haltevorrichtungen ermöglicht es, deren Ort, die jeweilige Stellung und den Referenzpunkt der jeweiligen Haltevorrichtung zu ermitteln und einzustellen.

Der im Rahmen der Erfindung verwendete Begriff einer baulichen Integration bedeutet vorzugsweise, dass die erfindungsgemäße Haltevorrichtung ein Gehäuse aufweist, wobei das Gehäuse den Kolbenstangenantrieb, die Steuereinheit, den Druckübersetzer, die Pneumatikventile, den Controller und/oder die Ventilantriebe enthält.

Darüber hinaus können innerhalb des Gehäuses mehrere Elektrokabel und Pneumatik-/Hydraulikleitungen (z.B. Schläuche oder Rohre) verlaufen, so dass außerhalb des Gehäuses keine Kabel oder Leitungen verlaufen müssen. Dadurch wird die Umpositionierung bzw. der Austausch der einzelnen Haltevorrichtungen wesentlich erleichtert, da die Handhabung der Haltevorrichtung nicht durch außenliegende Leitungen behindert wird.

In dem bevorzugten Ausführungsbeispiel der Erfindung weisen die einzelnen Haltevorrichtungen vorzugsweise ein Steckverbindungsteil zur elektrischen und/oder fluidischen Kontaktierung der Haltevorrichtung auf. Dieses Steckverbindungsteil stellt dann automatisch eine Steckverbindung mit einem entsprechend angepassten Steckverbindungsteil einer zur Montage dienenden Flanschplatte her, wenn die einzelne Haltevorrichtung in der Flanschplatte montiert wird. Beim Einstecken der einzelnen Haltevorrichtung in eine entsprechende Aufnahmebohrung in der Flanschplatte greifen die beiden Steckverbindungsteile von Haltevorrichtung und Flanschplatte also automatisch ineinander und stellen die gewünschte Verbindung her. Dies erleichtert ebenfalls das Umpositionieren bzw. den Austausch der einzelnen Haltevorrichtungen, da bei der mechanischen Montage auch automatisch eine fluidische bzw. elektrische Kontaktierung erfolgt, wodurch die umständlichen Arbeitsschritte zur Kontaktierung der einzelnen Haltevorrichtungen eingespart werden. Hierbei ist zu erwähnen, dass die beiden korrespondierenden Steckverbindungsteile an den einzelnen Haltevorrichtungen einerseits und an der Flanschplatte andererseits vorzugsweise koaxial ausgerichtet sind, damit die Steckverbindung beim axialen Einführen der einzelnen Haltevorrichtungen automatisch hergestellt werden kann.

In einem bevorzugten Ausführungsbeispiel der Erfindung ist die Werkstückauflage nicht starr mit der Kolbenstange verbunden, sondern über ein Gelenk, so dass die Werkstückauflage relativ zu der Kolbenstange schwenkbar ist. Vorzugsweise handelt es sich bei diesem Gelenk um ein Kugelgelenk, das allseitig schwenkbar ist. Eine derartige Lagerung der Werkstückauflage in einem Gelenk ermöglicht eine Anpassung der einzelnen Werkstückauflagen der verschiedenen Haltevorrichtungen an gekrümmte Werkstückoberflächen.

Darüber hinaus kann die Werkstückauflage mit ihrer Auflagefläche in einer beliebigen räumlichen Orientierung relativ zu der Kolbenstange angeordnet sein, was insbesondere dann vorteilhaft ist, wenn Werkstücke mit komplexen Oberflächenverläufen aufgelegt werden sollen. So schließt die Flächennormale der Auflagefläche mit der Verschieberichtung der Werkstückauflage einen bestimmten Winkel ein, wobei es sich beispielsweise um einen rechten Winkel oder um einen spitzen Winkel handeln kann. Es besteht jedoch alternativ auch die Möglichkeit, dass die Flächennormale der Auflagefläche der Werkstückauflage parallel zu der Verschieberichtung der Werkstückauflage ausgerichtet ist. Zur Einstellung des gewünschten Winkels zwischen der Flächennormale der Auflagefläche der Werkstückauflage einerseits und der Verschieberichtung der Werkstückauflage andererseits kann im Rahmen der Erfindung ein Winkelverbinder eingesetzt werden, der zwei zueinander angewinkelte Schenkel aufweist, wobei der Winkelverbinder den gewünschten Winkel einstellt.

In einem bevorzugten Ausführungsbeispiel der Erfindung weist die Haltevorrichtung einen Vakuumsauger auf, um das zu haltende Werkstück anzusaugen. Derartige Vakuumsauger sind an sich aus dem Stand der Technik bekannt und müssen deshalb nicht näher beschrieben werden. Vorzugsweise umfasst der Vakuumsauger einen Faltenbalg, der die Werkstückauflage seitlich umgibt und auf der Werkstückoberfläche aufsetzt. Im unbelasteten Zustand (d.h. ohne ein angesaugtes Werkstück) ragt der Faltenbalg vorzugsweise über die Werkstückauflage hinaus, wohingegen der Faltenbalg die Werkstückoberfläche beim Ansaugen des Werkstücks vorzugsweise seitlich abdichtet. Beim Ansaugen des Werkstücks wird der Faltenbalg also in axialer Richtung zusammengedrückt.

Weiterhin ist zu erwähnen, dass die Erfindung nicht Schutz beansprucht für die vorstehend beschriebenen Haltevorrichtungen als Grundelemente einer Universalspannvorrichtung. Vielmehr umfasst die Erfindung eine komplette Universalspannvorrichtung mit zahlreichen derartigen Haltevorrichtungen, die nebeneinander angeordnet und parallel zueinander ausgerichtet sind, wie es auch bei den eingangs beschriebenen herkömmlichen Universalspannvorrichtungen der Fall ist.

Die erfindungsgemäße Universalspannvorrichtung weist eine gemeinsame Flanschplatte zur mechanischen Halterung der einzelnen Haltevorrichtungen auf, wobei die einzelnen Haltevorrichtungen vorzugsweise an ihrer Kopfseite hängend in der Flanschplatte gehalten werden. Hierzu weist die Flanschplatte vorzugsweise mehrere Aufnahmebohrungen zur Aufnahme jeweils einer der Haltevorrichtungen auf. Bei der Montage werden die einzelnen Haltevorrichtungen also jeweils in die Aufnahmebohrungen eingeführt und dann an der Flanschplatte befestigt.

Gemäß der Erfindung erfolgt die Arretierung der aktiven universellen Haltevorrichtungen in der Flanschplatte durch einen Steckverschluss, der eine rein lineare Steckverbindung der Haltevorrichtung erfordert. Ein weiterer Vorteil einer solchen rein linearen Steckverbindung ist die erheblich größere Niederzugskraft der Verbindung. Darüber hinaus lässt sich der Außendurchmesser der Haltevorrichtung verringern, so dass sich in einem kompletten Universalspannsystem ein geringeres Rastermaß von beispielsweise 250 mm realisieren lässt, was 50 mm weniger ist als bei herkömmlichen Systemen. Die in dieser Variante der Erfindung eingesetzte rein lineare Steckverbindung ermöglicht also im Vergleich zu einem Bajonettverschluss eine größere Packungsdichte der einzelnen Haltevorrichtungen in einem Universalspannsystem.

Hierbei weist der Arretiermechanismus eine Kugelverriegelung auf, welche die einzelnen Haltevorrichtungen in der Flanschplatte des Universalspannsystems verriegelt.

Erfindungsgemäß weist diese Kugelverriegelung mehrere Kugelsperrbolzen auf, die in jeweils eine Aufnahmebohrung in der Flanschplatte eingeführt werden können und die jeweilige Haltevorrichtung in der zugehörigen Aufnahmebohrung der Flanschplatte arretieren. Die einzelnen Kugelsperrbolzen enthalten hierbei Verriegelungskugeln, die mittels eines axial verschiebbaren Verriegelungsstößels verriegelt oder frei gegeben werden können. Die Kugelsperrbolzen können also durch eine Betätigung des Verriegelungsstößels entriegelt werden, damit die jeweilige Haltevorrichtung aus der Flanschplatte herausgezogen bzw. in die Flanschplatte eingesetzt werden kann.

Darüber hinaus weisen die einzelnen Kugelsperrbolzen an ihrer Oberseite jeweils einen Eingriff auf, um eine formschlüssige Verbindung zu einem Greifer zu ermöglichen. Beispielsweise kann es sich bei diesem Eingriff um eine Nut handeln, die am oberen Ende der Kugelsperrbolzen angeformt ist.

Darüber hinaus weist die erfindungsgemäße Universalspannvorrichtung einen frei positionierbaren Greifer auf, um die einzelnen Haltevorrichtungen bei der Montage und Demontage in der Flanschplatte greifen zu können, wobei der Greifer beispielsweise manuell bewegt, oder von einem mehrachsigen Manipulator ggf. mit geeigneter Steuerung vollautomatisch (mannlos) umpositioniert werden kann. Die Erfindung umfasst also auch ein Universalspannsystem mit einem Manipulator, der die einzelnen Haltevorrichtungen entsprechend einem vorgegebenen Programm in der Flanschplatte positioniert. Bei dem Manipulator kann es sich beispielsweise um einen mehrachsigen Roboter handeln. Das Programm zur Positionierung der einzelnen Haltevorrichtungen in der Flanschplatte kann beispielsweise CAD-Daten (CAD: Computer Aided Design) des zu spannenden Werkstücks auswerten und die Haltevorrichtungen räumlich so positionieren, dass das Werkstück entsprechend seiner Form optimal gehalten bzw. unterstützt wird.

Im Gegensatz zum Stand der Technik weist der Greifer einen Verriegelungshebel auf, der quer zur Längsachse der Haltevorrichtung zwischen einer Greifstellung und einer Freigabestellung schwenkbar ist. In der Greifstellung greift der Verriegelungshebel in den bereits vorstehend erwähnten Eingriff in der Oberseite der einzelnen Kugelsperrbolzen ein und verbindet dadurch den Greifer formschlüssig mit den einzelnen Kugelsperrbolzen und damit auch mit der jeweiligen Haltevorrichtung. In der Freigabestellung geben die Verriegelungshebel dagegen die jeweilige Haltevorrichtung frei, so dass der Greifer aufgesetzt bzw. entfernt werden kann.

Das Schwenken des Verriegelungshebels erfolgt vorzugsweise mittels einer drehbaren Nockenscheibe, wobei die Nockenscheibe den Verriegelungshebel entsprechend ihrer Drehstellung in die Greifstellung oder in die Freigabestellung schwenkt.

Zum Drehen der Nockenscheibe kann ein pneumatischer Linearzylinder vorgesehen sein, jedoch sind auch andere Antriebsarten zum Drehen der Nockenscheibe möglich.

Darüber hinaus ist vorzugsweise eine mechanische Sicherung vorgesehen, um die Nockenscheibe und damit auch den Verriegelungshebel in der Greifstellung bzw. in der Freigabestellung zu fixieren. Eine derartige Sicherung kann beispielsweise aus einem Raststift bestehen, der federnd in die Nockenscheibe eingreift.

Die erfindungsgemäße Haltevorrichtung zeichnet sich vorzugsweise durch eine standardisierte Aufnahme (Kupplung) aus, die sämtliche Anschlüsse auf einem Ring enthält, wobei alle Steuerelemente so angeordnet sind, dass der Wechsel der Haltevorrichtung durch axiales Herausziehen bzw. Wiedereinsetzen möglich ist.

Darüber hinaus ist zu erwähnen, dass die erfindungsgemäße Haltevorrichtung in verschiedener Weise eingebaut sein kann. Eine Möglichkeit besteht in einer fest eingebauten Haltevorrichtung ohne oder mit einem eigenen aktiven Antrieb. Eine weitere Möglichkeit besteht darin, die erfindungsgemäße Haltevorrichtung in einem vordefinierten Feld von Aufnahmen wahlweise zu positionieren. Diese verschiedenen Varianten sind deswegen wichtig, weil sehr häufig große Teile gespannt werden sollen, aber möglicherweise nicht die gesamte Fläche mit Haltevorrichtungen bedeckt sein muss. Außerdem ist es möglich, die Anzahl der Antriebe, die separat angesteuert werden müssen, zu verringern, was wiederum eine Reduzierung des Aufwandes bedeutet.

An Stelle eines Bajonettsystems besteht auch die Möglichkeit eines linear andockenden Systems mit einem Nippel und einem Verriegelungselement. Vorteilhaft daran ist unter anderem, dass nur eine Linearbewegung erforderlich ist und die gesamte Anordnung etwas kompakter baut, so dass der Abstand zwischen den einzelnen Auflagepunkten verringert werden kann.

Ferner ist zu erwähnen, dass die Werkstückauflagen der einzelnen Haltevorrichtungen entweder in Längsrichtung aktiv oder passiv verschoben werden können, d.h. durch Ankopplung an eine externe NC-Achse (Spindel) und der Verschiebung durch diese.

Weiterhin besteht im Rahmen der Erfindung - wie bereits erwähnt - die Möglichkeit einer Umlenkung, die es erlaubt, Abstützpunkte an kritischen Stellen des Bauteiles dichter zueinander zu bringen. Das System wird dadurch flexibler und es können komplexere Bauteile in engeren Biegeradien damit gespannt werden, um sie bearbeiten zu können. Die verschiebbare Werkstückauflage benötigt hierbei vorzugsweise eine Verdrehsicherung im Anlageelement.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Perspektivansicht einer erfindungsgemäßen Haltevorrichtung, die in einer Universalspannvorrichtung als Grundelement eingesetzt werden kann,
- Figur 2: eine vereinfachte Seitenansicht einer erfindungsgemäßen Universalspannvorrichtung mit zahlreichen derartigen Haltevorrichtungen,
- Figur 3: eine schematische Aufsicht auf eine Universalspannvorrichtung mit zahlreichen matrixförmig angeordneten Haltevorrichtungen als Grundelement,
- Figur 4: eine aufgeschnittene Perspektivansicht einer Klemmvorrichtung der Haltevorrichtung gemäß Figur 1,
- Figur 5: eine schematische Darstellung der baulich integrierten Steuereinheit der Haltevorrichtung gemäß Figur 1,
- Figuren 6A-6D: verschiedene Ansichten der baulich integrierten Steuereinheit der Haltevorrichtung gemäß Figur 1,
- Figur 7: eine Perspektivansicht einer nicht erfindungsgemäßen Haltevorrichtung in einer Flanschplatte mit einem aufgesetzten Greifer,
- Figur 8: eine vergrößerte Perspektivansicht aus Figur 7 mit zwei Haltevorrichtungen in der Flanschplatte,
- Figur 9: eine andere Perspektivansicht der Darstellung gemäß Figur 7,
- Figur 10: eine vergrößerte Perspektivansicht der Darstellung gemäß Figur 9,

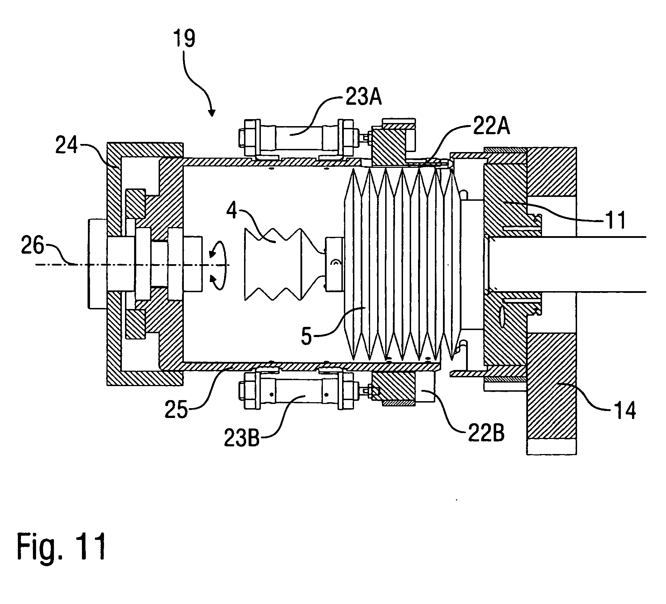

- Figur 11: eine Querschnittsansicht durch die Haltevorrichtung mit dem aufgesetzten Greifer,
- Figuren 12A-12C: verschiedene Varianten mit unterschiedlichen Winkeln zwischen der Werkstückauflage und der Kolbenstange,
- Figur 13: eine vergrößerte Perspektivansicht des Vakuumsaugers aus den Figuren 12A-12C,
- Figur 14: eine Perspektivansicht einer erfindungsgemäßen Abwandlung von Figur 7 mit einer rein linearen Steckverbindung zwischen der Haltevorrichtung und der Flanschplatte,
- Figur 15A: eine Aufsicht auf den Greifmechanismus des Greifers bei dem Ausführungsbeispiel gemäß Figur 14,
- Figur 15B: eine Unteransicht des Greifmechanismus aus Figur 15A,
- Figur 16: eine Querschnittsansicht des Ausführungsbeispiels gemäß Figur 14 mit einem aufgesetzten Greifer,
- Figur 17: eine Querschnittsansicht eines Kugelsperrbolzens des Ausführungsbeispiels gemäß den Figuren 14-16.

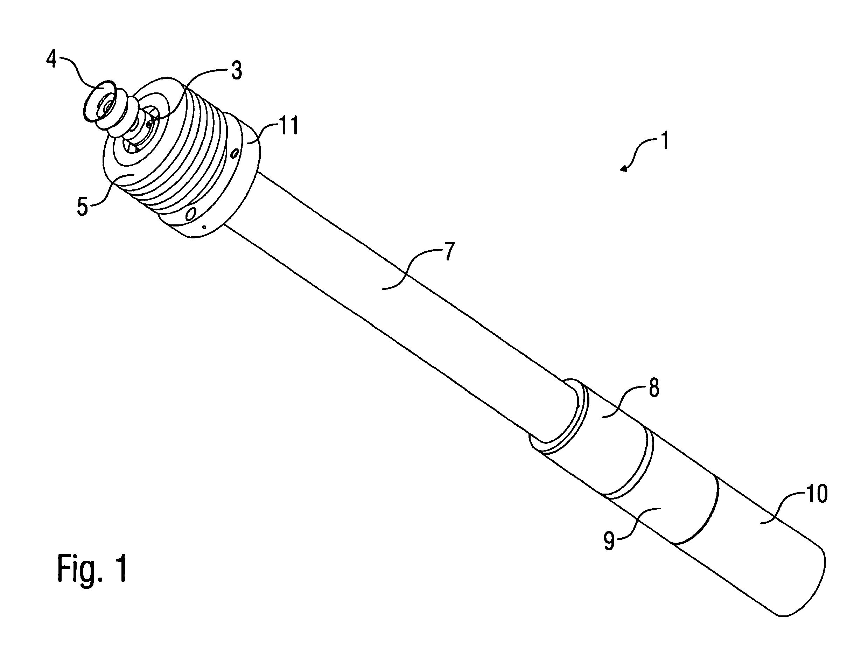

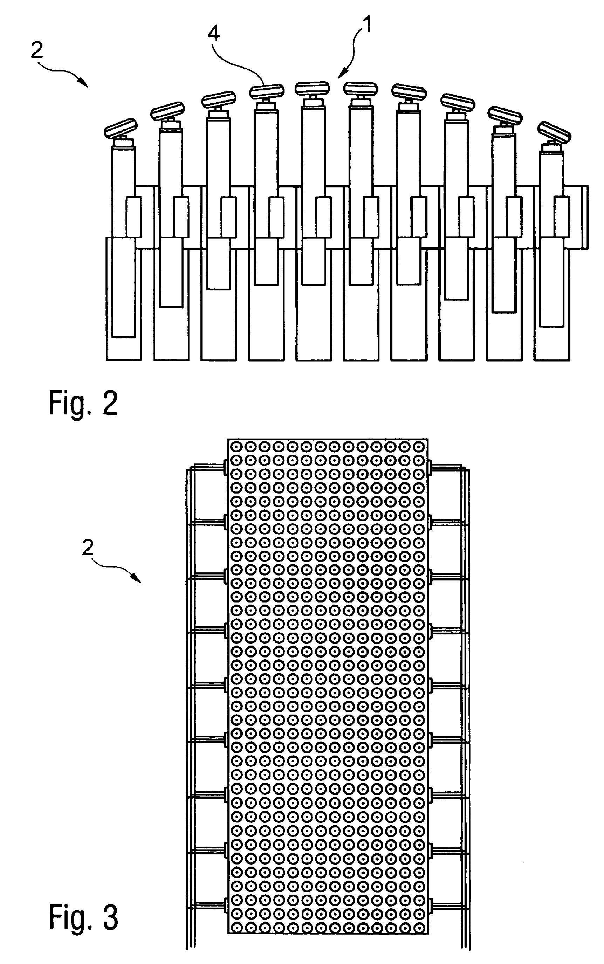

Figur 1 zeigt eine aktive Haltevorrichtung 1, die in einer in den Figuren 2 und 3 vereinfacht dargestellten Universalspannvorrichtung 2 als Grundelement eingesetzt werden kann, wobei in der Universalspannvorrichtung 2 zahlreiche derartige Haltevorrichtungen 1 parallel nebeneinander matrixförmig angeordnet sind, so dass sich die Universalspannvorrichtung 2 der Außenkontur des zu fixierenden Bauteils anpassen kann.

Die Haltevorrichtung 1 weist eine axial verschiebbare Kolbenstange 3 auf, die an ihrem oberen Ende einen herkömmlichen Vakuumsauger 4 als Werkstückauflage trägt. Die Kolbenstange 3 ist hierbei im oberen Bereich von einem schützenden Faltenbalg 5 umgeben.

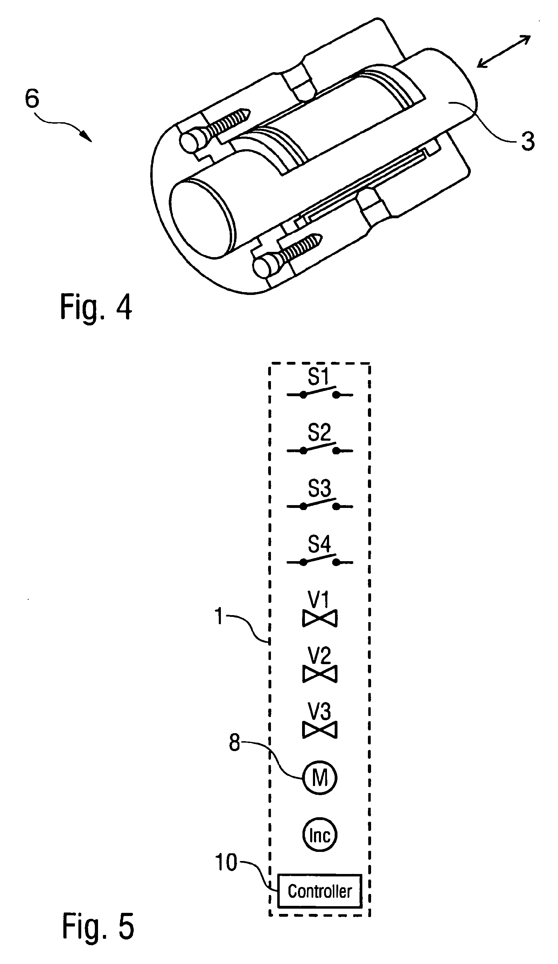

Innerhalb des Faltenbalgs 5 befindet sich eine Klemmvorrichtung 6, die in Figur 4 dargestellt ist und an sich aus dem Stand der Technik bekannt ist, so dass der Aufbau und die Funktionsweise der Klemmvorrichtung 6 nicht näher beschrieben werden muss.

Die Kolbenstange 3 ist in einem äußeren Rohr 7 axial verschiebbar, wobei sich am unteren Ende des Rohrs 7 ein Kolbenstangenantrieb 8, ein Druckübersetzer 9 und ein Controller 10 befinden, die baulich in die Haltevorrichtung 1 integriert sind.

Darüber hinaus weist die Haltevorrichtung 1 noch einen Flansch 11 auf, der im Wesentlichen zwei Funktionen hat.

Zum Einen dient der Flansch 11 zur mechanischen Fixierung der Haltevorrichtung 1 in einer hier nicht dargestellten Flanschplatte der Universalspannvorrichtung 2. Hierzu wird die Haltevorrichtung 1 in eine Aufnahmebohrung in der Flanschplatte der Universalspannvorrichtung 2 hineingesteckt, bis der Flansch 11 der Haltevorrichtung 1 auf dem Umfangsrand der Aufnahmebohrung der Flanschplatte der Universalspannvorrichtung 2 aufliegt. Die Fixierung der Haltevorrichtung 1 in der Universalspannvorrichtung kann dann durch einen Bajonettverschluss erfolgen, wie noch detailliert beschrieben wird.

Zum Anderen hat der Flansch 11 der Haltevorrichtung 1 aber auch die Funktion, eine fluidische und elektrische Kontaktierung der Haltevorrichtung 1 in der Universalspannvorrichtung 2 herzustellen. Hierzu weist der Flansch 11 ein nicht dargestelltes Steckverbindungsteil auf, das beim Einstecken der Haltevorrichtung 1 in die zugehörige Aufnahmebohrung der Flanschplatte der Universalspannvorrichtung 2 automatisch eine Steckverbindung herstellt. Über die Steckverbindung erfolgt dann die elektrische Ansteuerung des Controllers 10 über einen Steuerbus und die pneumatische Ansteuerung des Druckübersetzers 9.

Die vorstehend beschriebene erfindungsgemäße Haltevorrichtung 1 kann also in der Universalspannvorrichtung 2 ohne größeren Aufwand umpositioniert oder ausgetauscht werden, da die fluidische und elektrische Kontaktierung der Haltevorrichtung 1 automatisch erfolgt, wenn die Haltevorrichtung 1 in die zugehörige Aufnahmebohrung in der Flanschplatte der Universalspannvorrichtung 2 hineingesteckt wird.

Darüber hinaus wird die Umpositionierung bzw. der Austausch der Haltevorrichtung 1 in der Universalspannvorrichtung 2 auch dadurch erleichtert, dass der Controller 10 in die Haltevorrichtung 1 baulich integriert ist, so dass die elektrische Kontaktierung der Haltevorrichtung 1 einfach durch einen Steuerbus erfolgen kann.

Figur 5 zeigt schematisch, dass in die Haltevorrichtung 1 neben dem Controller 10 auch mehrere Schalter S1-S4, Ventile V1-V3 sowie der Kolbenstangenantrieb 8 integriert sind.

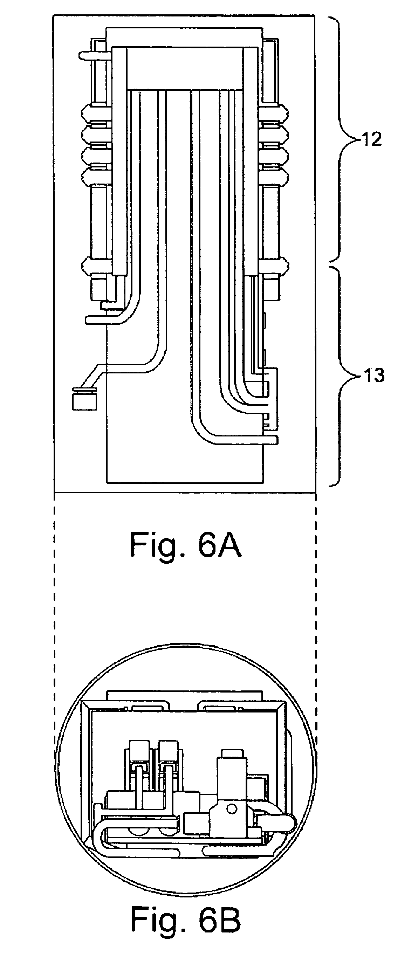

Die Figuren 6A-6D zeigen verschiedene Ansichten des unteren Abschnitts der Haltevorrichtung 1, wobei ein oberer Bereich 12 den Controller 10, eine Servosteuerung und ein Bus-System umfasst, während ein unterer Bereich 13 ein pneumatisches Ventil für Druckluft, ein pneumatisches Ventil für den Vakuumsauger 4 und ein pneumatisches Ventil für den Druckübersetzer 9 enthält.

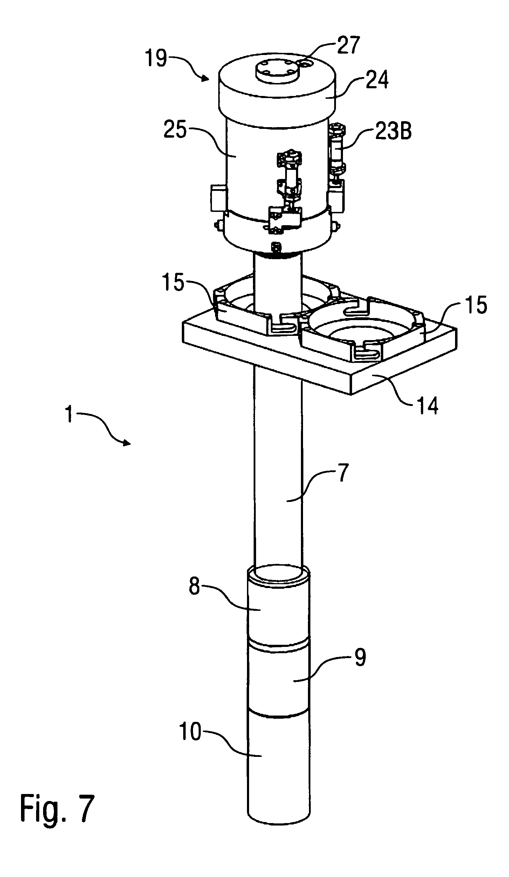

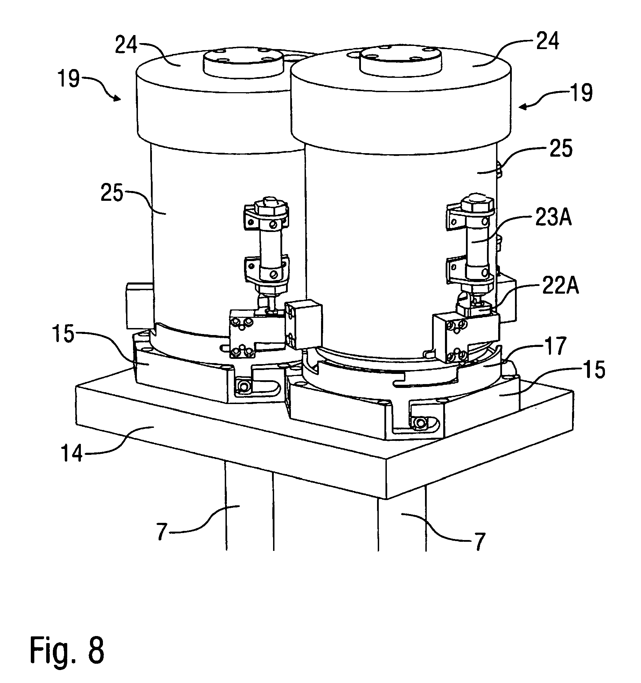

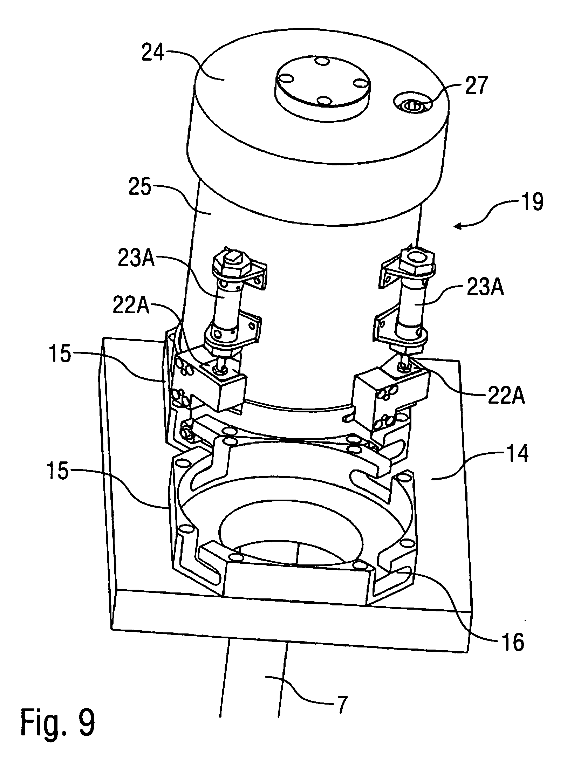

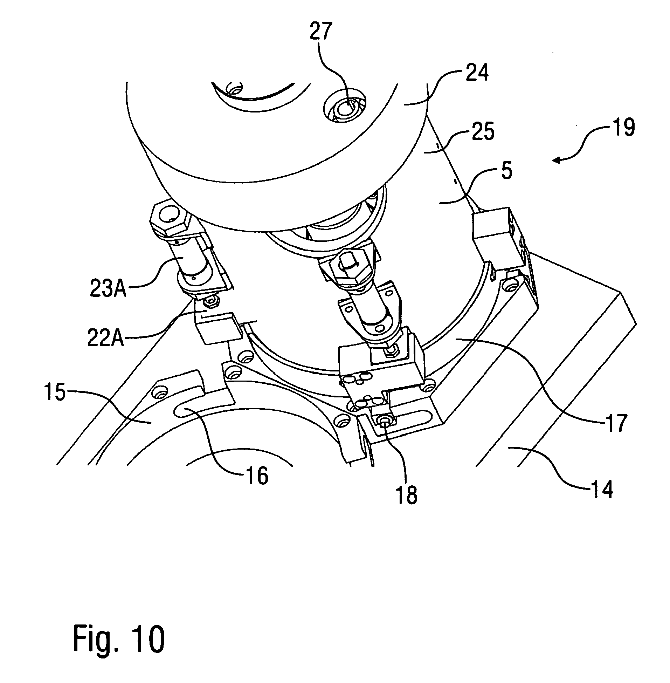

Die Figuren 7-10 zeigen ein weiteres Ausführungsbeispiel (nicht gemäß der Erfindung), das mit dem vorstehend beschriebenen Ausführungsbeispiel weitgehend übereinstimmt, so dass zur Vermeidung von Wiederholungen auf die vorstehende Beschreibung verwiesen wird, wobei für entsprechende Einzelheiten dieselben Bezugszeichen verwendet werden.

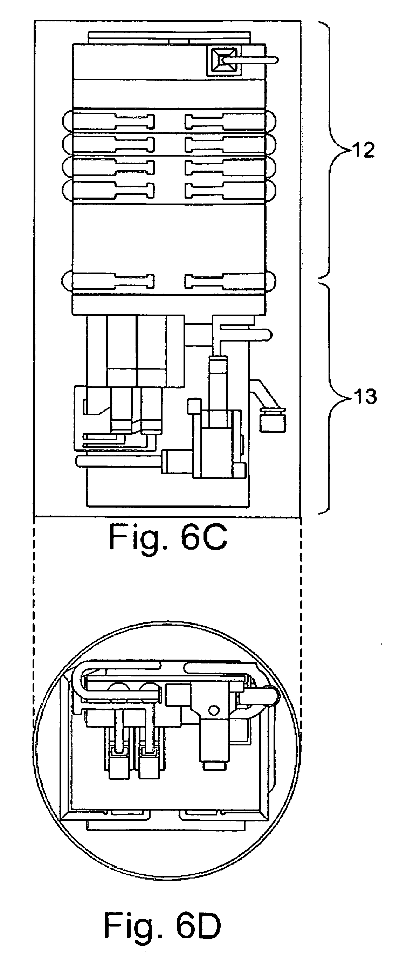

In den Figuren 6-9 ist nicht nur die Haltevorrichtung 1 dargestellt, sondern auch ein Ausschnitt einer Flanschplatte 14 der Universalspannvorrichtung 2, wobei die Flanschplatte 14 in der Realität wesentlich ausgedehnter ist und eine Vielzahl von Aufnahmebohrungen für jeweils eine Haltevorrichtung 1 umfasst.

Die mechanische Fixierung der Haltevorrichtung 1 in der Flanschplatte 14 erfolgt hierbei durch einen Bajonettverschluss. Hierzu sind an der Oberseite der Flanschplatte 14 Aufnahmeteile 15 angebracht, welche die jeweilige Aufnahmebohrung ringförmig umgeben und in ihrer Mantelfläche eine Nut 16 aufweisen.

Die Haltevorrichtung 1 weist dagegen ein entsprechend angepasstes ringförmiges Dreh-Steck-Teil 17 auf, das relativ zu der Haltevorrichtung 1 drehbar ist und außen Stifte 18 trägt, die in die Nut 16 eingeführt werden können.

Zur Montage der Haltevorrichtung 1 wird die Haltevorrichtung 1 also in die jeweilige Aufnahmebohrung in der Flanschplatte 14 hineingesteckt, bis die Stifte 18 in dem Dreh-Steck-Teil 17 in die zugehörigen Nuten 16 in dem Aufnahmeteil 15 gleiten. Anschließend wird das Dreh-Steck-Teil 17 dann relativ zu der Haltevorrichtung 1 gedreht, wodurch der Bajonettverschluss verriegelt wird.

Darüber hinaus ist in diesen Zeichnungen noch ein Greifer 19 dargestellt, der es bei der Montage bzw. Demontage der Haltevorrichtung 1 ermöglicht, die Haltevorrichtung 1 kopfseitig zu greifen.

Der Greifer 19 weist hierzu mehrere Vorsprünge 20 auf, die zum Greifen in entsprechende Nuten 21 in dem Dreh-Steck-Teil 17 eingreifen. Die Nuten 21 in dem Dreh-Steck-Teil 17 erstrecken sich hierbei nicht über den gesamten Umfang des Dreh-Steck-Teils 17, sondern nur über einen bestimmten Winkel.

Darüber hinaus weist der Greifer 19 mehrere Schieber 22A, 22B auf, die von jeweils einem Pneumatikzylinder 23A, 23B axial verschoben werden können, um den Vorsprung 20 in der Nut 21 zu verriegeln. Zum Verriegeln werden die Schieber 22A, 22B also axial nach unten geschoben, so dass sich der Vorsprung 20 nicht mehr aus der Nut 21 lösen kann. Darüber hinaus ermöglicht dies, dass der Greifer 19 ein Drehmoment auf das Dreh-Steck-Teil 17 ausübt, um den Bajonettverschluss zu verriegeln.

Hierbei ist zu erwähnen, dass der Schieber 22A einen zylindrischen Querschnitt aufweist, während der Schieber 22B einen rechteckigen Querschnitt aufweist. Der zylindrische Schieber 22A verbindet das Dreh-Steck-Teil 17 mit dem Flansch 11, wenn keine rotatorische Relativbewegung zwischen dem Dreh-Steck-Teil 17 und dem Flansch 11 erwünscht ist.

Der Greifer 19 kann im Betrieb von einem Manipulator (z.B. einem mehrachsigen Roboter) bewegt werden, um die einzelnen Haltevorrichtungen 1 in der Universalspannvorrichtung 2 zu montieren bzw. zu demontieren.

Hierzu weist der Greifer 19 einen Flansch 24 auf, der von dem Manipulator geführt wird. Darüber hinaus weist der Greifer 19 ein glockenförmiges drehbares Teil 25 auf, das um eine Drehachse 26 relativ zu dem Flansch 24 drehbar ist, um den Bajonettverschluss zu verriegeln bzw. zu entriegeln. Diese Drehbewegung des drehbaren Teils 25 wird von einem Elektroantrieb und einem Untersetzungsgetriebe angetrieben, wobei der Elektroantrieb über eine in dem Greifer 19 befindliche mechanische Schnittstelle 27 angekoppelt werden kann.

Die beiden Schieber 22A, 22B bzw. die dazugehörenden Pneumatikzylinder 23A, 23B werden in ihren jeweiligen Endlagen elektrisch abgefragt.

In Verbindung mit einem Drehgeber am Antriebsmotor des drehbaren Teils 25 (Greiferglocke) des Greifers 19 und einem Linearmesssystem des zusätzlich erforderlichen Linearantriebes erkennt eine Steuerung der Anlage die jeweiligen Positionen und Zustände.

Des weiteren ist in dem Flansch 11 der Haltevorrichtung 1 ein Näherungsschalter eingebaut, der bedämpft wird, wenn die Haltevorrichtung 1 korrekt auf der Flanschplatte 14 aufsitzt.

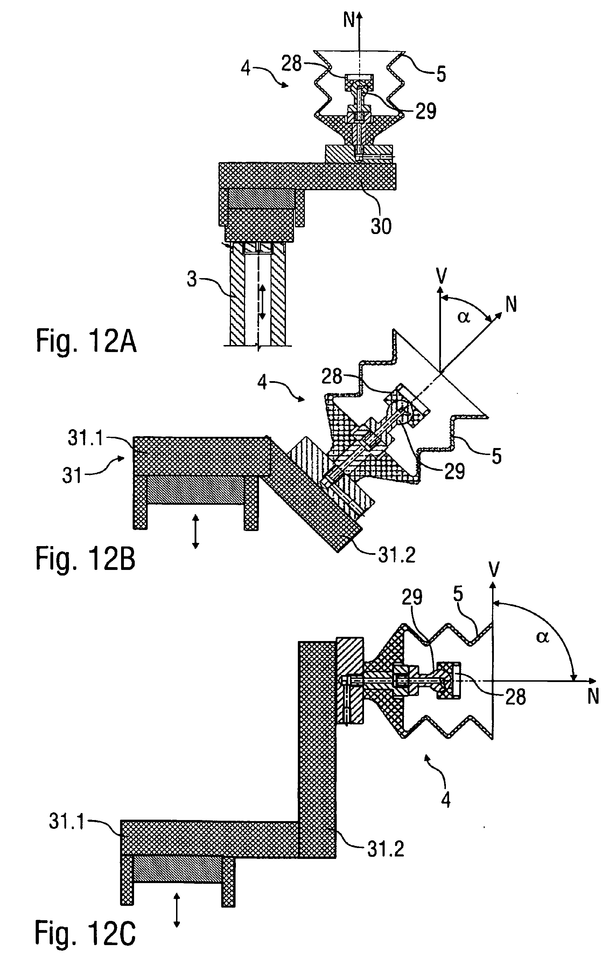

Die Figuren 12A-12C zeigen verschiedene mögliche Varianten der Anbringung des Vakuumsaugers 4 an der Kolbenstange 3, wobei diese Varianten teilweise mit den vorstehend beschriebenen Ausführungsbeispielen übereinstimmen, so dass zur Vermeidung von Wiederholungen auf die vorstehende Beschreibung verwiesen wird, wobei für entsprechende Einzelheiten dieselben Bezugszeichen verwendet werden.

Eine Besonderheit dieser Varianten besteht darin, dass in dem Faltenbalg 5 eine Werkstückauflage 28 mittels eines Kugelgelenks 29 allseitig schwenkbar angeordnet ist. Beim Ansaugen des jeweiligen Werkstücks kann die Werkstückauflage 28 also entsprechend der Ausrichtung und dem Verlauf der Werkstückoberfläche geschwenkt werden, wobei die Schwenkung passiv erfolgt, so dass sich die Werkstückauflage 28 selbständig an die Werkstückoberfläche anpasst.

Bei der Variante gemäß Figur 12B ist der Vakuumsauger 4 über einen Befestigungsbügel 30 mit der verschiebbaren Kolbenstange 3 verbunden.

Zum einen bewirkt der Befestigungsbügel 30 hierbei, dass die Flächennormale N der Auflagefläche der Werkstückauflage 28 in der Neutralstellung parallel zu der Verschieberichtung V der Kolbenstange 3 ausgerichtet ist, wie es auch bei dem Ausführungsbeispiel gemäß Figur 1 der Fall ist.

Zum anderen sorgt der Befestigungsbügel 30 aber auch dafür, dass der Vakuumsauger 4 seitlich zu der Kolbenstange 3 versetzt angeordnet ist.

Bei der Variante gemäß Figur 12B ist der Vakuumsauger 4 dagegen über einen Winkelverbinder 31 mit der Kolbenstange 3 verbunden, wobei der Winkelverbinder 31 zwei zueinander angewinkelte Schenkel 31.1, 31.2 aufweist. Die beiden Schenkel 31.1, 31.2 des Winkelverbinders 31 stellen hierbei einen bestimmten Winkel α zwischen der Flächennormale N der Auflagefläche der Werkstückauflage einerseits und der Verschieberichtung V der Kolbenstange 3 andererseits ein.

Bei der Variante gemäß Figur 12C sind die beiden Schenkel 31.1, 31.2 des Winkelverbinders 31 rechtwinklig zueinander ausgerichtet, so dass auch die Flächennormale N der Auflagefläche der Werkstückauflage 28 rechtwinklig zu der Verschieberichtung V der Kolbenstange 3 ausgerichtet ist.

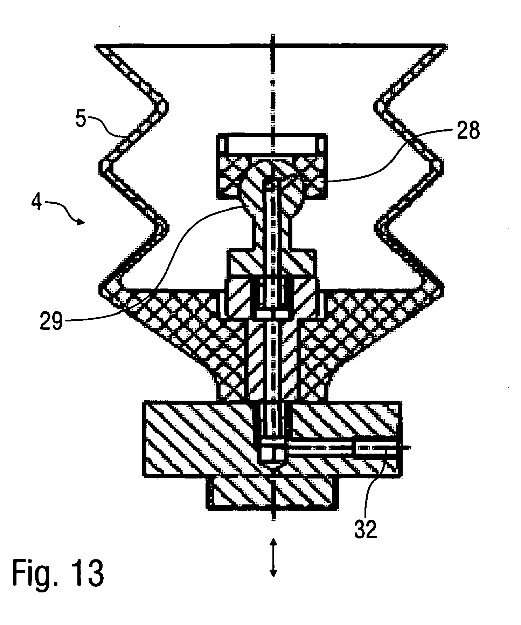

Aus der vergrößerten Detailansicht in Figur 13 ist zusätzlich ersichtlich, dass der Vakuumsauger 4 einen Vakuumanschluss 32 aufweist, um das Werkstück ansaugen zu können.

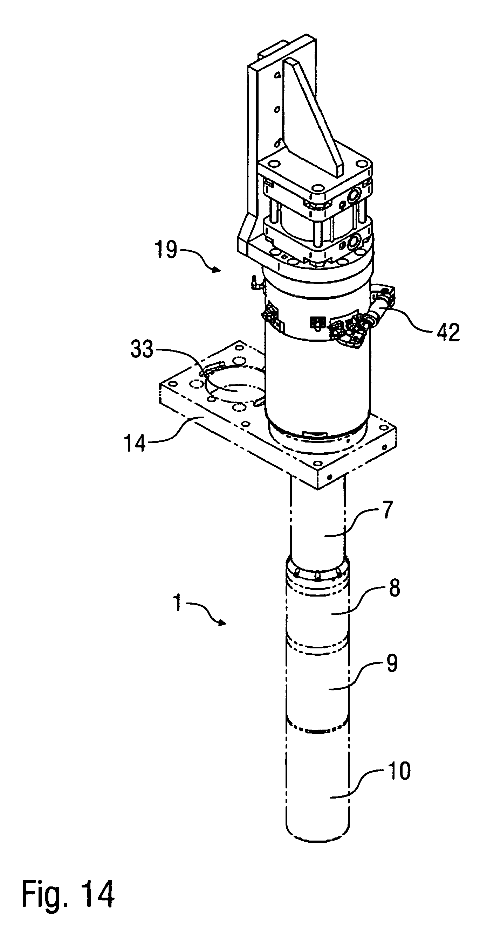

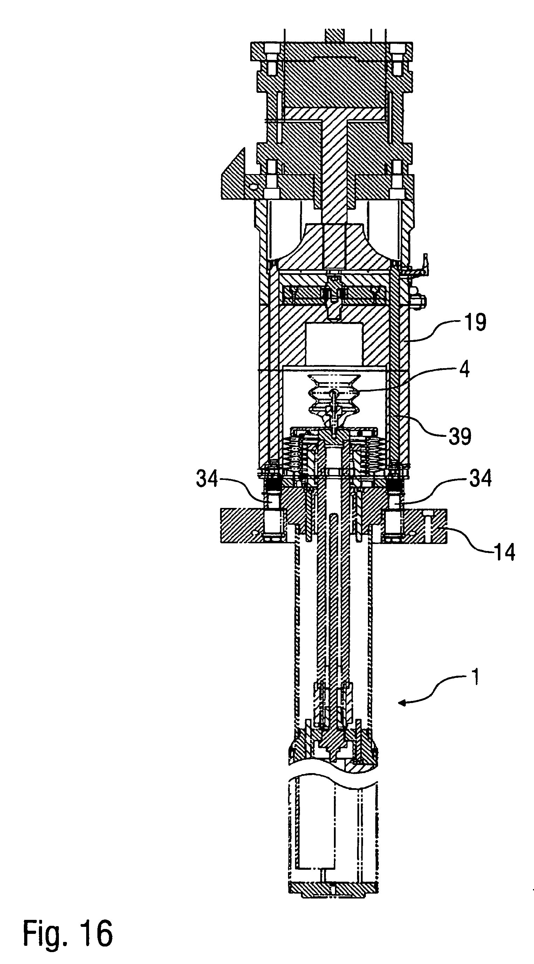

Die Figuren 14-17 zeigen eine erfindungsgemäße Abwandlung der vorstehend beschriebenen Ausführungsbeispiele, wobei die Abwandlung teilweise mit den vorstehend beschriebenen Ausführungsbeispielen übereinstimmt, so dass zur Vermeidung von Wiederholungen auf die vorstehende Beschreibung bezug genommen wird, wobei für entsprechende Einzelheiten dieselben Bezugszeichen verwendet werden.

Eine Besonderheit dieses Ausführungsbeispiels besteht darin, dass zur mechanischen Verbindung zwischen der Haltevorrichtung 1 und der zugehörigen Flanschplatte 14 eine rein lineare Steckverbindung vorgesehen ist. Zur Fixierung der Haltevorrichtung 1 in der zugehörigen Flanschplatte 14 muss die Haltevorrichtung 1 also nur in eine entsprechende Aufnahmebohrung 33 in der Flanschplatte 14 hineingesteckt werden, wobei keine Drehbewegung der kompletten Haltevorrichtung 1 erforderlich ist, um die Haltevorrichtung 1 in der Aufnahmebohrung 33 zu verriegeln. Vielmehr wird der Greifer 19 mit der darin befindlichen Haltevorrichtung 1 einfach über der jeweiligen Aufnahmebohrung 33 platziert und dann abgesenkt, so dass die Haltevorrichtung 1 in die Aufnahmebohrung 33 eingeführt wird.

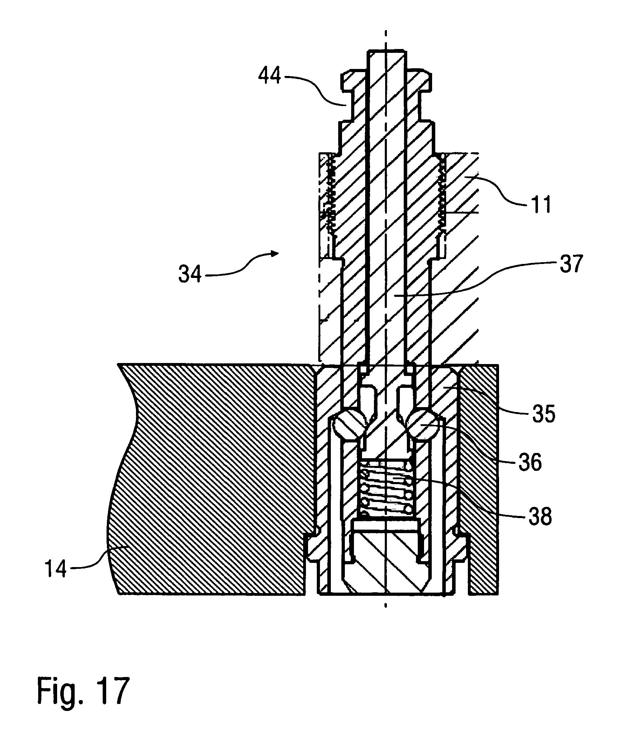

Zur Arretierung der Haltevorrichtung 1 in der Flanschplatte 14 weist die Haltevorrichtung 1 mehrere Kugelsperrbolzen 34 auf, die detailliert in Figur 17 dargestellt sind. Die Kugelsperrbolzen 34 sind in den Flansch 11 der Haltevorrichtung 1 seitlich eingeschraubt und greifen im montierten Zustand in eine Verriegelungshülse 35 in der Flanschplatte 14 ein.

Darüber hinaus weist der Kugelsperrbolzen 14 Verriegelungskugeln 36 und einen Verriegelungsstößel 37 auf, wobei der Verriegelungsstößel 37 in dem Kugelsperrbolzen 34 axial zwischen einer Verriegelungsstellung und einer Entriegelungsstellung verschiebbar ist.

In der Verriegelungsstellung drückt der Verriegelungsstößel 37 die Verriegelungskugeln 36 radial nach außen und arretiert dadurch den Kugelsperrbolzen 34 in der Verriegelungshülse 35 in der Flanschplatte 14.

In der Entriegelungsstellung ermöglicht der Verriegelungsstößel 37 dagegen ein Ausweichen der Verriegelungskugeln 36 radial nach innen, um den Kugelsperrbolzen 34 in die Verriegelungshülse 35 einführen oder daraus entfernen zu können.

Der Verriegelungsstößel 37 wird hierbei durch eine Spiralfeder 38 in Richtung der Verriegelungsstellung vorgespannt. Zum Entriegeln wird der Verriegelungsstößel 37 dagegen an seiner oberen Stirnfläche herabgedrückt, um den Verriegelungsstößel 37 in die Entriegelungsstellung zu bringen.

Zum Entriegeln des Kugelsperrbolzens 34 weist der Greifer 19 für jeden der Kugelsperrbolzen 34 einen Stößel 39 auf, der beim Greifen von oben auf den Verriegelungsstößel 37 drückt und diesen dadurch nach unten in die Entriegelungsstellung schiebt, damit der Kugelsperrbolzen 34 in die zugehörige Verriegelungshülse 35 in der Flanschplatte 14 eingeführt werden kann.

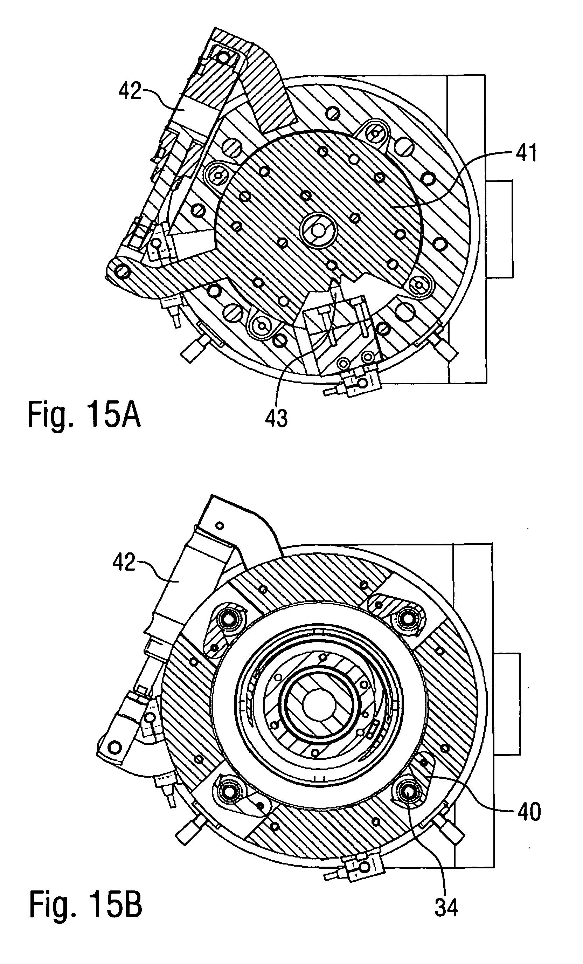

Die mechanische Verbindung zwischen dem Greifer 19 und der Haltevorrichtung 1 während des Greifens erfolgt dagegen durch mehrere Verriegelungshebel 40, die rechtwinklig zur Längsachse der Haltevorrichtung schwenkbar sind, wie aus Figur 15 ersichtlich ist.

Die Schwenkbewegung der einzelnen Verriegelungshebel 40 erfolgt hierbei durch eine Nockenscheibe 41, die von einem Pneumatikzylinder 42 gedreht werden kann, wie insbesondere aus Figur 15A ersichtlich ist. Die Linearbewegung des Pneumatikzylinders 42 wird also zunächst in eine Drehbewegung der Nockenscheibe 41 umgewandelt. Die Drehbewegung der Nockenscheibe 41 wird dann wiederum umgewandelt in eine Schwenkbewegung der Verriegelungshebel 40.

Darüber hinaus weist dieses Ausführungsbeispiel der Erfindung noch eine mechanische Sicherung auf, um eine unerwünschte Drehbewegung der Nockenscheibe 41 zu verhindern. Diese mechanische Sicherung besteht aus einem Stift 43, der in eine entsprechende Verrastung der Umfangsfläche der Nockenscheibe 41 federnd eingreift und dadurch verhindert, dass sich die Nockenscheibe 41 unerwünscht dreht.

Die Verriegelungshebel 40 greifen während des Greifvorgangs, d.h. im verriegelten Zustand, in eine Ringnut 44 (vgl. Fig. 17) an der Oberseite der Kugelsperrbolzen 34 ein und verbinden den Greifer 19 dadurch formschlüssig mit der jeweiligen Haltevorrichtung 1.

Nach der Positionierung der jeweiligen Haltevorrichtung 1 in der zugehörigen Aufnahmebohrung 33 schwenken die Pneumatikzylinder 42 die Verriegelungshebel 40 dann wieder in die Freigabestellung. Hierbei drücken die Stößel 39 des Greifers 19 von oben axial auf den Verriegelungsstößel 37, wodurch der Kugelsperrbolzen 34 aus der Verriegelungshülse 35 der Flanschplatte 14 herausgezogen werden kann.

**Bezugszeichenliste:**

| | | | |
|---|---|---|---|
| 1 | Haltevorrichtung | 31 | Winkelverbinder |
| 2 | Universalspannvorrichtung | 31.1 | Schenkel |
| 3 | Kolbenstange | 31.2 | Schenkel |
| 4 | Vakuumsauger | 32 | Vakuumanschluss |
| 5 | Faltenbalg | 33 | Aufnahmebohrung |
| 6 | Klemmvorrichtung | 34 | Kugelsperrbolzen |
| 7 | Rohr | 35 | Verriegelungshülse |
| 8 | Kolbenstangenantrieb | 36 | Verriegelungskugeln |
| 9 | Druckübersetzer | 37 | Verriegelungsstößel |
| 10 | Controller | 38 | Spiralfeder |
| 11 | Flansch | 39 | Stößel |
| 12 | Oberer Bereich | 40 | Verriegelungshebel |
| 13 | Unterer Bereich | 41 | Nockenscheibe |
| 14 | Flanschplatte | 42 | Pneumatikzylinder |
| 15 | Aufnahmeteil | 43 | Stift |
| 16 | Nut | 44 | Ringnut |
| 17 | Dreh-Steck-Teil | | |
| 18 | Stifte | | |
| 19 | Greifer | | |
| 20 | Vorsprung | | |
| 21 | Nuten | | |
| 22A | Schieber | | |
| 22B | Schieber | | |
| 23A | Pneumatikzylinder | | |
| 23B | Pneumatikzylinder | | |
| 24 | Flansch | | |
| 25 | Drehbares Teil | | |
| 26 | Drehachse | | |
| 27 | mechanische Schnittstelle | | |
| 28 | Werkstückauflage | | |
| 29 | Kugelgelenk | | |
| 30 | Befestigungsbügel | | |

## Patentansprüche

1. Universalspannsystem zur Halterung eines Werkstücks mit
a) einer Vielzahl von aktiven universellen Haltevorrichtungen (1) zur Halterung des Werkstücks, wobei die Haltevorrichtungen (1) jeweils folgendes aufweisen:
a1) eine verschiebbare Kolbenstange (3),
a2) eine Werkstückauflage (4), die von der Kolbenstange (3) verschiebbar geführt wird und auf der das Werkstück im Betrieb aufliegt, und
a3) einen Kolbenstangenantrieb (9) zum aktiven Verschieben der Kolbenstange (3) mit der Werkstückauflage (4),
b) einer gemeinsamen Flanschplatte (14) zur mechanischen Halterung der einzelnen Haltevorrichtungen (1), wobei die einzelnen Haltevorrichtungen (1) nebeneinander angeordnet und parallel zueinander ausgerichtet sind,
c) jeweils einem Arretiermechanismus (34-40) zur mechanischen Fixierung der einzelnen Haltevorrichtungen (1) in der Flanschplatte (14), und
d) einem beweglichen Greifer (19) zum Greifen der einzelnen Haltevorrichtungen (1) bei der Montage und Demontage in der Flanschplatte,
**dadurch gekennzeichnet**,
e) dass der Arretiermechanismus (34-40) eine Kugelverriegelung (34) aufweist, und
f) dass die einzelnen Haltevorrichtungen (1) jeweils mehrere Kugelsperrbolzen (34) aufweisen, die in jeweils eine Aufnahmebohrung (33) in der Flanschplatte (14) eingeführt werden können, und
g) dass die einzelnen Kugelsperrbolzen (34) an ihrer Oberseite jeweils einen Eingriff (44), insbesondere eine Nut, für eine formschlüssige Verbindung zu einem Greifer (19) aufweisen, und
h) dass der Greifer (19) einen Verriegelungshebel (40) aufweist, der quer zur Längsachse der Haltevorrichtung (1) zwischen einer Greifstellung und einer Freigabestellung schwenkbar ist, wobei der Verriegelungshebel (40) in der Greifstellung in den Eingriff (44) der Haltevorrichtung (1) eingreift, und
i) dass die einzelnen Haltevorrichtungen (1) jeweils eine baulich integrierte Steuereinheit (10) zum Ansteuern des Kolbenstangenantriebs (9) aufweisen.

2. Universalspannsystem nach Anspruch 1, **gekennzeichnet durch** mehrere Aufnahmebohrungen in der Flanschplatte (14) zur Aufnahme jeweils einer der Haltevorrichtungen (1).

3. Universalspannsystem nach Anspruch 1 oder 2,
**dadurch gekennzeichnet,**
a) **dass** der Arretiermechanismus (34-40) die aktive universelle Haltevorrichtung (1) ohne eine Drehbewegung der kompletten Haltevorrichtung (1) in der Flanschplatte (14) verriegelt oder entriegelt, und/oder
b) **dass** die einzelnen Kugelsperrbolzen (34) jeweils einen Verriegelungsstößel (37) aufweisen, der zwischen einer Verriegelungsstellung und einer Entriegelungsstellung verschiebbar ist.

4. Universalspannsystem nach Anspruch 3,
**dadurch gekennzeichnet,**
a) **dass** der Verriegelungshebel (40) mittels einer drehbaren Nockenscheibe (41) schwenkbar ist, wobei die Nockenscheibe (41) den Verriegelungshebel (40) entsprechend ihrer Drehstellung in die Greifstellung oder in die Freigabestellung schwenkt, und/oder
b) **dass** zum Drehen der Nockenscheibe (41) ein Linearzylinder (42) vorgesehen ist, und/oder
c) **dass** zur Fixierung der Nockenscheibe (41) in der Greifstellung und/oder in der Freigabestellung eine Sicherung (43) vorgesehen ist, und/oder
d) **dass** die Sicherung (43) einen Raststift aufweist, der federnd in die Nockenscheibe (41) eingreift.

5. Universalspannsystem nach einem der vorhergehenden Ansprüche, **gekennzeichnet durch** eine Klemmvorrichtung (6) zum Festklemmen der Kolbenstange (3).

6. Universalspannsystem nach Anspruch 5,
**dadurch gekennzeichnet,**
a) **dass** zum Ansteuern der Klemmvorrichtung (6) ein Druckübersetzer (9) vorgesehen ist, wobei der Druckübersetzer (9) an einer Sekundärseite mit der Klemmvorrichtung (6) verbunden ist, während der Druckübersetzer (9) an einer Primärseite mit einem externen Fluidanschluss verbunden ist, insbesondere mit einem Druckluftanschluss, und/oder
b) **dass** der Druckübersetzer (9) baulich in die Haltevorrichtung (1) integriert ist, insbesondere an dem der Werkstückauflage (4) gegenüberliegenden Ende der Haltevorrichtung (1), und/oder
c) **dass** der Druckübersetzer (9) eine Feder aufweist, die unabhängig von dem Druck an der Primärseite des Druckübersetzers (9) einen Klemmdruck an der Sekundärseite des Druckübersetzer (9) erzeugt, und/oder
d) **dass** der von der Feder des Druckübersetzers (9) erzeugte Klemmdruck bewirkt, dass die Klemmvorrichtung (6) die Kolbenstange (3) festklemmt, und/oder
e) **dass** der Druckübersetzer (9) an seiner Primärseite über den externen Fluidanschluss mit einem Lösedruck beaufschlagt werden muss, um die Klemmvorrichtung (6) zu lösen, und/oder
f) **dass** der Druckübersetzer (9) luft-hydraulisch arbeitet, wobei der Druckübersetzer (9) an der Sekundärseite hydraulisch und an der Primärseite pneumatisch arbeitet.

7. Universalspannsystem nach einem der vorhergehenden Ansprüche, **dadurch gekennzeichnet, dass** die integrierte Steuereinheit (10) folgende Komponenten aufweist:
a) ein erstes Pneumatikventil, das den Kolbenstangenantrieb (9) steuert, und/oder
b) einen ersten Ventilantrieb, der das erste Pneumatikventil betätigt, und/oder
c) ein zweites Pneumatikventil, das einen Vakuumsauger ansteuert, und/oder
d) einen zweiten Ventilantrieb, der das zweite Pneumatikventil betätigt, und/oder
e) ein drittes Pneumatikventil, das den Druckübersetzer (9) ansteuert, und/oder
f) einen dritten Ventilantrieb, der das dritte Pneumatikventil betätigt.

8. Universalspannsystem nach einem der vorhergehenden Ansprüche, **dadurch gekennzeichnet,**
a) **dass** die integrierte Steuereinheit (10) einen Controller aufweist,
b) **dass** der Controller (10) mindestens eines der Pneumatikventile ansteuert,
c) **dass** die Haltevorrichtung (1) einen externen Busanschluss aufweist, der mit dem Controller (10) verbunden ist, so dass der Controller (10) über einen externen Steuerbus steuerbar ist.

9. Universalspannsystem nach einem der vorhergehenden Ansprüche, **gekennzeichnet durch** ein Gehäuse (7) wobei das Gehäuse (7) den Kolbenstangenantrieb (9), die Steuereinheit (10), den Druckübersetzer (9), die Pneumatikventile, den Controller (10) und/oder die Ventilantriebe enthält.

10. Universalspannsystem nach Anspruch 9, **gekennzeichnet durch** mehrere Elektrokabel und Pneumatikleitungen, insbesondere als Schlauch oder Rohr, die alle innerhalb des Gehäuses (7) verlaufen.

11. Universalspannsystem nach einem der vorhergehenden Ansprüche, **dadurch gekennzeichnet,**
a) **dass** die Haltevorrichtung (1) zur elektrischen und/oder fluidischen Kontaktierung der Haltevorrichtung (1) ein Steckverbindungsteil aufweist, und/oder
b) **dass** das Steckverbindungsteil bei einer Montage der Haltevorrichtung (1) in einer Flanschplatte automatisch eine elektrisch und/oder fluidische Steckverbindung mit einem entsprechend angepassten Steckverbindungsteil in der Flanschplatte herstellt, und/oder
c) **dass** das Steckverbindungsteil der Haltevorrichtung (1) und das zugehörige Steckerbindungsteil der Flanschplatte axial ausgerichtet ist.

12. Universalspannsystem nach einem der vorhergehenden Ansprüche, **dadurch gekennzeichnet, dass** die Werkstückauflage (28) ein Gelenk (29) aufweist, insbesondere ein Kugelgelenk (28), so dass die Werkstückauflage (28) relativ zu der Kolbenstange (3) schwenkbar ist.

13. Universalspannsystem nach einem der vorhergehenden Ansprüche, **dadurch gekennzeichnet,**
a) **dass** die Werkstückauflage (28) eine Auflagefläche mit einer bestimmten Flächennormale (N) aufweist, und
b) **dass** die Werkstückauflage (28) in einer bestimmten Verschieberichtung (V) verschiebbar ist, und
c) **dass** die Flächennormale (N) der Auflagefläche der Werkstückauflage (28) gegenüber der Verschieberichtung (V) der Werkstückauflage (28) um einen bestimmten Winkel (α) angewinkelt ist, insbesondere mit einem rechten Winkel (α) oder mit einem spitzen Winkel (α),
d) **dass** die Kolbenstange (39 vorzugsweise durch einen Winkelverbinder (31) mit der Werkstückauflage (28) verbunden ist, wobei der Winkelverbinder (31) zwei zueinander angewinkelte Schenkel (31.1, 31.2) aufweist.

14. Universalspannsystem nach einem der vorhergehenden Ansprüche, **dadurch gekennzeichnet,**
a) **dass** die Haltevorrichtung (1) einen Vakuumsauger (4) aufweist, um das Werkstück anzusaugen, und
b) **dass** der Vakuumsauger (4) einen Faltenbalg (5) aufweist, der die Werkstückauflage (28) umgibt,
c) **dass** der Faltenbalg (5) im unbelasteten Zustand vorzugsweise über die Werkstückauflage (28) hinaus ragt,
d) **dass** der Faltenbalg (5) die Werkstückoberfläche beim Ansaugen des Werkstücks vorzugsweise seitlich abdichtet.

## Claims

1. Universal clamping system to hold a work piece with
a) a number of active universal holding devices (1) to hold the work piece, whereby the holding devices(1) each have the following:
a1) a movable piston rod (3),
a2) a work piece support (4) which is guided movably by the piston rod (3) and on which the work piece rests in operation, and
a3) a piston rod drive (9) for actively moving the piston rod (3) with the work piece support (4),
b) a common flange plate (14) to mechanically hold the individual holding devices (1), whereby the individual holding devices (1) are arranged next to each other and aligned parallel to each other,
c) a locking mechanism (34-40) in each case to mechanically fix the individual holding devices (1) in the flange plate (14), and
d) a movable gripper (19) to grip the individual holding devices (1) during assembly and dismantling in the flange plate,
**characterised in that**
e) the locking mechanism (34-40) has a spherical interlock (34), and
f) the individual holding devices (1) each have several spherical locking bolts (34) which may be inserted into a borehole (33) each in the flange plate (14), and
g) the individual spherical locking bolts (34) each have a recess (44), in particular a groove, in their upper side for a form-fit connection to a gripper (19), and
h) the gripper (19) has an interlock lever (40) which can be swiveled transversely to the longitudinal axis of the holding device (1) between a gripper position and a release position, whereby the interlock lever (40) in the gripper position engages in the recess (44) of the holding device (1), and
i) the individual holding devices (1) each have a structurally integrated control unit (10) to control the piston rod drive (9).

2. Universal clamping system in accordance with Claim 1, **characterised by** several boreholes in the flange plate (14) to accommodate one of the holding devices (1) each.

3. Universal clamping system in accordance with Claim 1 or 2, **characterised in that**
a) the locking mechanism (34-40) locks or unlocks the active universal holding device (1) without a rotating movement of the complete holding device (1) in the flange plate (14), and/or
b) the individual spherical lock bolts (34) each have an interlock plunger (37) which can be moved between an interlock position and an unlock position.

4. Universal clamping system in accordance with Claim 3, **characterised in that**
a) the interlock lever (40) can be swiveled using a rotatable cam disc (41), whereby the cam disc (41) pivots the interlock lever (40) in accordance with its position of rotation into the grip position or to the release position, and/or
b) a linear cylinder (42) is intended to rotate the cam disc (41), and/or
c) a safety mechanism (43) is intended to fix the cam disc (41) in the grip position and/or in the release position, and/or
d) the safety mechanism (43) has a locking pin which spring engages with the cam disc (41).

5. Universal clamping system in accordance with one of the preceding claims, **characterised by** a clamping device (6) to fix the piston rod (3).

6. Universal clamping system in accordance with Claim 5, **characterised in that**
a) a pressure transducer (9) is provided to control the clamping device (6), whereby a secondary side of the pressure transducer (9) is connected to the clamping device, whilst a primary side of the pressure transducer (9) is connected to an external fluid connection, in particular to a pressurised air connection, and/or
b) the pressure transducer (9) is structurally integrated into the holding device (1), in particular at the end of the holding device (1) opposite to the work piece support (4), and/or
c) the pressure transducer (9) has a spring, which, irrespective of the pressure at the primary side of the pressure transducer (9), generates a clamping pressure at the secondary side of the pressure transducer (9), and/or
d) the clamping pressure generated by the spring of the pressure transducer (9) causes the clamping device (6) to tightly hold the piston rod (3), and/or
e) a release pressure must be applied to the primary side of the pressure transducer (9) via the external fluid connection in order to release the clamping device (6) and/or
f) the pressure transducer (9) works on an air-hydraulic basis, whereby the pressure transducer (9) operates hydraulically on the secondary side and pneumatically on the primary side.

7. Universal clamping system in accordance with one of the preceding claims, **characterised in that** the integrated control unit (10) has the following components:
a) a first pneumatic valve which controls the piston rod drive (9), and/or
b) a first valve drive which actuates the first pneumatic valve, and/or
c) a second pneumatic valve which controls a vacuum suction device, and/or
d) a second valve drive which actuates the second pneumatic valve, and/or
e) a third pneumatic valve which controls the pressure transducer (9), and/or
f) a third valve drive which actuates the third pneumatic valve.

8. Universal clamping system in accordance with one of the preceding claims, **characterised in that**
a) the integrated control unit (10) has a controller,
b) the controller (10) controls at least one of the pneumatic valves,
c) the holding device (1) has an external bus connection which is connected with the controller (10) so that the controller (10) can be controlled via an external control bus.

9. Universal clamping system in accordance with one of the preceding claims, **characterised by** a housing (7), whereby the housing (7) contains the piston rod drive (9), the control unit (10), the pressure transducer (9), the pneumatic valves, the controller (10) and/or the valve drives.

10. Universal clamping system in accordance with Claim 9, **characterised by** several electrical cables and pneumatic lines, in particular as hose or tube, which all run inside the housing (7).

11. Universal clamping system in accordance with one of the preceding claims, **characterised in that**
a) the holding device (1) has a connector for the electrical and/or fluidic contacting of the holding device (1), and/or
b) when assembling the holding device (1) in a flange plate, the connector automatically creates an electrical and/or fluidic plug-in connection with a correspondingly adapted connector part in the flange plate, and/or
c) the connector part is aligned axially to the holding device (1) and the corresponding connector part of the flange plate.

12. Universal clamping system in accordance with one of the preceding claims, **characterised in that** the work piece support (28) has a joint (29), in particular a ball joint (28) so that the work piece support (28) can be swiveled relative to the piston rod (3).

13. Universal clamping system in accordance with one of the preceding claims, **characterised in that**
a) the work piece support (28) has a support area with a specific surface normal (N), and
b) the work piece support (28) can be moved in a certain direction (V), and
c) the surface normal (N) of the area of the work piece surface (28) is angled by a certain angle (α) relative to the direction of movement (V) of the work piece support (28), in particular at a right angle (α) or an acute angle (α),
d) the piston rod (3) is preferably connected to the work piece support (28) by an angular connector (31), whereby the angular connector (31) has two legs facing each other (31.1, 31.2).

14. Universal clamping system in accordance with one of the preceding claims, **characterized in that**
a) the holding device (1) has a vacuum suction device (4) in order to suck up the work piece, and
b) the vacuum suction device (4) has bellows (5) which encloses the work piece support (28),
c) the bellows (5) in unloaded state preferably protrude over the work piece support (28),
d) the bellows (5) seals the work piece surface preferably laterally when sucking up a work piece.

## Revendications

1. Système de serrage universel servant à la fixation d'une pièce à usiner, comprenant :
a) une pluralité de dispositifs de maintien (1) universels actifs servant à la fixation de la pièce à usiner, sachant que les dispositifs de maintien (1) présentent respectivement les éléments qui suivent :
a1) une tige de piston (3) pouvant être déplacée par coulissement,
a2) un support pour pièce à usiner (4), qui est guidé de manière à pouvoir être coulissé par la tige de piston (3) et sur lequel repose, en état de fonctionnement, la pièce à usiner, et
a3) un système d'entraînement de tige de piston (9) servant à faire coulisser activement la tige de piston (3) à l'aide du support de pièce à usiner (4),
b) une platine à brides (14) commune servant à la fixation mécanique des divers dispositifs de maintien (1), sachant que les divers dispositifs de maintien (1) sont disposés de manière juxtaposée et sont orientés de manière parallèle les uns par rapport aux autres,
c) respectivement un mécanisme d'arrêt (34 - 40) servant à immobiliser de manière mécanique les divers dispositifs de maintien (1) dans la platine à brides (14), et
d) un système de préhension (19) mobile servant à saisir les divers dispositifs de maintien (1) lors du montage et du démontage dans la platine à brides,
caractérisé en ce
e) que le mécanisme d'arrêt (34 - 40) présente un verrouillage à billes (34), et
f) que les divers dispositifs de maintien (1) présentent respectivement plusieurs boulons de blocage à billes (34), qui peuvent être introduits dans respectivement un alésage de réception (33) dans la platine à brides (14), et
g) que les divers boulons de blocage à billes (34) présentent au niveau de leur côté supérieur respectivement un système d'engrènement (44), en particulier une rainure, pour un assemblage par complémentarité de forme au système de préhension (19), et
h) que le système de préhension (19) présente un levier de verrouillage (40), qui peut pivoter, de manière transversale par rapport à l'axe longitudinal du dispositif de maintien (1), entre une position d'engrènement et une position de libération, sachant que le levier de verrouillage (40) vient en prise dans la position d'engrènement avec le système d'engrènement (44) du dispositif de maintien (1), et
i) que les divers dispositifs de maintien (1) présentent respectivement une unité de commande (10) à structure intégrée servant à commander le système d'entraînement de tige de piston (9).

2. Système de serrage universel selon la revendication 1, **caractérisé**
**par** plusieurs alésages de réception dans la platine à brides (14) servant à recevoir respectivement un des dispositifs de maintien (1).

3. Système de serrage universel selon la revendication 1 ou 2,
**caractérisé en ce**
a) **que** le mécanisme d'arrêt (34 - 40) verrouille ou déverrouille le dispositif de maintien (1) universel actif sans mouvement de rotation effectué par le dispositif de maintien (1) complet dans la platine à brides (14), et/ou
b) **que** les divers boulons de blocage à bille (34) présentent respectivement un poussoir de verrouillage (37), qui peut être déplacé par coulissement entre une position de verrouillage et une position de déverrouillage.

4. Système de serrage universel selon la revendication 3,
**caractérisé en ce**
a) **que** le levier de verrouillage (40) peut être pivoté au moyen d'un disque à came (41) rotatif, sachant que le disque à came (41) fait pivoter le levier de verrouillage (40), conformément à sa position de rotation, dans la position d'engrènement ou dans la position de libération, et/ou
b) **qu'**est prévu, pour faire tourner le disque à came (41), un vérin linéaire (42), et/ou
c) **qu'**est prévue, pour immobiliser le disque à came (41) dans la position d'engrènement et/ou dans la position de libération, une sécurité (43), et/ou
d) **que** la sécurité (43) présente une tige d'encliquetage qui vient en prise de manière élastique avec le disque à came (41).

5. Système de serrage universel selon l'une quelconque des revendications précédentes, **caractérisé par** un dispositif de blocage (6) servant à bloquer la tige de piston (3).

6. Système de serrage universel selon la revendication 5,
**caractérisé en ce**
a) **qu'**un multiplicateur de pression (9) est prévu pour commander le dispositif de blocage (6), sachant que le multiplicateur de pression (9) est raccordé, au niveau d'un côté secondaire, au dispositif de blocage (6), tandis que le multiplicateur de pression (9) est raccordé, au niveau d'un côté primaire, à un raccord de fluide externe, en particulier à un raccord d'air comprimé, et/ou
b) **que** le multiplicateur de pression (9) est intégré du point de vue de la structure dans le dispositif de maintien (1), en particulier au niveau de l'extrémité, faisant face au support de pièce à usiner (4), du dispositif de maintien (1), et/ou
c) **que** le multiplicateur de pression (9) présente un ressort, qui génère, indépendamment de la pression exercée au niveau du côté primaire du multiplicateur de pression (9), une pression de serrage au niveau du côté secondaire du multiplicateur de pression (9), et/ou
d) **que** la pression de serrage générée par le ressort du multiplicateur de pression (9) a pour effet que le dispositif de serrage (6) bloque la tige de piston (3), et/ou
e) **que** le multiplicateur de pression (9) doit être soumis impérativement à l'action d'une pression de relâchement au niveau de son côté primaire par l'intermédiaire du raccord de fluide externe, pour relâcher le dispositif de serrage (6), et/ou
f) **que** le multiplicateur de pression (9) fonctionne de manière aérohydraulique, sachant que le multiplicateur de pression (9) fonctionne de manière hydraulique au niveau du côté secondaire et de manière pneumatique au niveau du côté primaire.

7. Système de serrage universel selon l'une quelconque des revendications précédentes, **caractérisé en ce que** l'unité de commande (10) intégrée présente les composants qui suivent :
a) une première soupape pneumatique qui commande le système d'entraînement de tige de piston (9), et/ou
b) un premier système d'entraînement de soupape qui actionne la première soupape pneumatique, et/ou
c) une deuxième soupape pneumatique qui commande un système d'aspiration sous vide, et/ou
d) un deuxième système d'entraînement de soupape, qui actionne la deuxième soupape pneumatique, et/ou
e) une troisième soupape pneumatique, qui commande le multiplicateur de pression (9), et/ou
f) un troisième système d'entraînement de soupape, qui actionne la troisième soupape pneumatique.

8. Système de serrage universel selon l'une quelconque des revendications précédentes, **caractérisé en ce**
a) **que** l'unité de commande (10) intégrée présente un contrôleur,
b) **que** le contrôleur (10) commande au moins une des soupapes pneumatiques,
c) **que** le dispositif de maintien (1) présente un raccord de bus externe, qui est raccordé au contrôleur (10) de sorte que le contrôleur (10) peut être commandé par l'intermédiaire d'un bus de commande externe.

9. Système de serrage universel selon l'une quelconque des revendications précédentes, **caractérisé par** un boîtier (7), sachant que le boîtier (7) comporte le système d'entraînement de tige de piston (9), l'unité de commande (10), le multiplicateur de pression (9), les soupapes pneumatiques, le contrôleur (10) et/ou les systèmes d'entraînement de soupape.

10. Système de serrage universel selon la revendication 9, **caractérisé par** plusieurs câbles électriques et conduites pneumatiques, en particulier sous la forme de flexibles ou de tuyaux s'étendant tous à l'intérieur du boîtier (7).

11. Système de serrage universel selon l'une quelconque des revendications précédentes, **caractérisé en ce**
a) **que** le dispositif de maintien (1) présente une partie de raccordement par enfichage afin d'établir le contact électrique et/ou fluidique avec le dispositif de maintien (1), et/ou
b) **que** la partie de raccordement par enfichage établit, lors d'un montage du dispositif de maintien (1) dans une platine à brides, automatiquement un raccordement par enfichage électrique et/ou fluidique à une partie de raccordement par enfichage adaptée de manière correspondante dans la platine à brides, et/ou
c) **que** la partie de raccordement par enfichage du dispositif de maintien (1) et la partie de raccordement par enfichage associée de la platine à brides sont orientées axialement.

12. Système de serrage universel selon l'une quelconque des revendications précédentes **caractérisé en ce que** le support de pièce à usiner (28) présente une articulation (29), en particulier une articulation à rotule (28) de sorte que le support de pièce à usiner (28) peut être pivoté par rapport à la tige de piston (3).

13. Système de serrage universel selon l'une quelconque des revendications précédentes, **caractérisé en ce**
a) **que** le support de pièce (28) présente une surface d'appui présentant une normale à sa surface (N) définie, et
b) **que** le support de pièce à usiner (28) peut être déplacé par coulissement dans un sens de déplacement par coulissement (V) défini, et
c) **que** la normale à la surface (N) de la surface d'appui du support de pièce à usiner (28) forme par rapport au sens de déplacement par coulissement (V) du support de pièce à usiner (28) un angle (α) défini, en particulier un angle (α) droit ou un angle (α) aigu,
d) **que** la tige de piston (39) est raccordée de préférence au support de pièce à usiner (28) par une équerre de raccordement (31), sachant que l'équerre de raccordement (31) présente deux branches (31.1, 31.2) formant l'une par rapport à l'autre un angle.

14. Système de serrage universel selon l'une quelconque des revendications précédentes, **caractérisé en ce**
a) **que** le dispositif de maintien (1) présente un système d'aspiration sous vide (4) pour aspirer la pièce à usiner, et
b) **que** le système d'aspiration sous vide (4) présente un soufflet en accordéon (5) qui entoure le support de pièce à usiner (28),
c) **que** le soufflet en accordéon (5) s'étend, lorsqu'il n'est pas chargé, de préférence au-delà du support de pièce (28),
d) **que** le soufflet en accordéon (5) assure l'étanchéité de la surface de pièce à usiner de préférence sur les côtés lors de l'aspiration de la pièce à usiner.
